# EUROPEAN PATENT APPLICATION

(11) **EP 1 168 792 A2**
(43) Date of publication of application: **02.01.2002**
(21) Application number: 01202475.8
(22) Date of filing: 27.06.2001
(51) Int. Cl.: H04M 3/487

(54) **A method for establishing a telephone connection**

(30) Priority: 30.06.2000 NL 1015582
(71) Applicant: VSN Beheer B.V., 5803 AP Venray (NL)
(72) Inventor: Poels, Martinus Petrus Johannes Maria, 5803 AP Venray (NL)
(74) Representative: Valkonet, Rutger

(57) **Abstract**

The invention relates to a method for establishing a telephone connection between a calling party and a called party over a telephone line, comprising the steps of the transmission by the calling party of a signal regarding the identity of the called party to a local telephone switching centre, the forwarding of said identity signal to the remote telephone switching centre of the called party by the local telephone switching centre, whether or not via several intermediate telephone switching centres, and the simultaneous setup of a duplex speech connection over the telephone line, the receipt of a confirmation signal transmitted by the remote telephone switching centre and the forwarding of said confirmation signal to the calling party by the local telephone switching centre, in which signal the identity of the called party is confirmed, the activation of the ringer in the called party's telephone, the receipt by the local telephone switching centre of a connection signal from the called party the moment the called party answers the telephone, as a result of which a telephone speech connection is established over the telephone line that has been set up.

In accordance with the invention, the method is to that end characterized in that after the telephone connection has been terminated by the calling party or the called party, a message, for example a commercial message, is generated in the "point-of-interconnect" switching centre that is operative at some point between the local telephone switching centre and the remote telephone switching centre in the established telephone connection, which message is transmitted to the party who is still connected to the open telephone connection.

## Description

The invention relates to a method for establishing a telephone connection between a calling party (local) and a called party (remote) over a telephone line, comprising the steps of:
the transmission by the calling party of a signal regarding the identity of the called party to a local telephone switching centre;
the forwarding of said identity signal to the remote telephone switching centre of the called party by the local telephone switching centre, whether or not via several intermediate telephone switching centres, and the simultaneous setup of a duplex speech connection over the telephone line;
the receipt of a confirmation signal transmitted by the remote telephone switching centre and the forwarding of said confirmation signal to the calling party by the local telephone switching centre, in which signal the identity of the called party is confirmed;
the activation of the ringer in the called party's telephone;
the receipt by the local telephone switching centre of a connection signal from the called party the moment the called party answers the telephone, as a result of which a telephone speech connection is established over the telephone line that has been set up.

The above sequence of steps is a general description of the procedure for establishing a telephone connection. Upon termination of the call, the telephone connection can be broken by either one of the parties.

The other party will still be connected to his telephone switching centre in that case, and after the call has been terminated said party will hear the well-known tones of an interrupted telephone connection.

Patent Abstracts of Japan, volume 008, no. 008 (E-221) of 13th January 1984 in respect of Japanese patent publication no. JP-58/173951 (application no. 57/056212) discloses a telephone switching centre, and in particular a home switching unit PBAX, which comprises storage means and which is set or programmed in such a manner that an informational message is generated and reproduced to the calling party while the telephone connection is being set up. The moment the called party answers the call, the informational message is interrupted and the telephone speech connection between the two parties is established. Said reproducing of the informational message is continued after the speech connection has been broken by either one of the parties.

One drawback of this application is, among other things, the fact that every local telephone switching centres needs to be modified and converted for this additional telephone service, which is not only time-consuming and costly, but which is moreover not always possible, due to the limitations that the local telephone switching centre may have. In addition, every modification of the telephone switching centre needs to be carried out on a local level, so that the collaboration of the local telephone company is required. Also this has technical as well as financial drawbacks.

In order to be able to reproduce several informational messages, or other informational messages, it will furthermore be necessary to reset or reprogram every local telephone switching centre, which, given the current rapid information facilities, is a labourious, time-consuming and costly affair. In addition to this, the modification (each time) of every local telephone switching centre for this additional telephone service may lead to capacity losses for the telephone company.

The object of the method according to the invention is precisely to overcome these drawbacks and to provide a procedure by means of which a message can be transferred to the party who is still connected after the telephone connection has been broken, and that in a more efficient, quicker and cheaper manner, irrespective of the configuration of the various local telephone switching centres and without said local telephone switching centres being involved.

In accordance with the invention, the method is to that end characterized in that after the telephone connection has been terminated by the calling party or the called party, a message, for example a commercial message, is generated in the "point-of-interconnect" switching centre that is operative at some point between the local telephone switching centre and the remote telephone switching centre in the telephone line that has been set up, which message is transmitted to the party who is still connected to the open telephone connection.

This facility makes it possible to confront the other party with a message after termination of the telephone connection, which message may originate from the calling party who has just broken the telephone connection, independently of the configurations, facilities or limitations of the (local) or (remote) telephone switching centre and telephone companies.

It will be apparent that the method according to the invention has many possibilities for reaching the public by means of messages, also after termination of a call.

In accordance with the invention, the method may furthermore be characterized in that the party listening to the message is capable of establishing a telephone connection with the sender of the message, via said party's telephone set, while the message is being reproduced. This is a very effective way of approaching customers, which furthermore leads to an efficient utilization of the capacity of the telephone network, since the listener is still in contact with his telephone switching centre.

In accordance with the invention, the contents of the message can be partially determined by the identity signal or by the telephone switching centre in question. Thus the contents of the message can be changed in a very simple and especially quick manner from the "point-of-interconnect" switching centre that is operative at some point in the telephone connection the calling party and the called party, which makes the telephone service according to the invention versatile and efficient. In this connection the language in which the message is reproduced may be considered, or information about the region from where the still connected party is calling (for example information about work locally being carried out on the telephone network, or information about the weather). In addition to this, the telephone service according to the invention is not confronted with all kinds of limitations in the various local telephone switching centres or by interference from the various (international) telephone companies.

Furthermore, the present method is simpler and more versatile than the applications that are known so far and that have been described above, which require local modification of every telephone switching centre. Instead of being transferred to the still connected party via every telephone switching centre, the message is according to the invention applied to the telephone connection that has been set up at some point by a "point-of-interconnect" switching centre and transmitted to the party who is still connected, independently of the local telephone network and telephone companies.

Only one POI switching centre present at some point in the telephone connection will suffice for generating and transmitting messages in accordance with the invention, and thus it is no longer necessary to update every local telephone switching centre with the hardware and software that is required for such a telephone service. Furthermore it is possible to adapt the messages centrally and in a simple manner, without placing too heavy a load on the telephone network.

The invention will now be explained in more detail with reference to a drawing, wherein:
Figures 1a and 1b show the procedure for establishing a telephone connection according to the invention;
Figure 1c shows another embodiment of the method according to the invention;
Figure 2 schematically shows an example of the method according to the invention.

Using the current telephone technology, a telephone connection is established between a calling party and a called party according to a procedure comprising a sequence of steps. The setting up of a telephone line between a calling party A and a called party B, as well as the establishing of a telephone connection over said telephone line takes place in a telephone switching centre TC, which is programmed to have each telephone call take place in accordance with the said procedure.

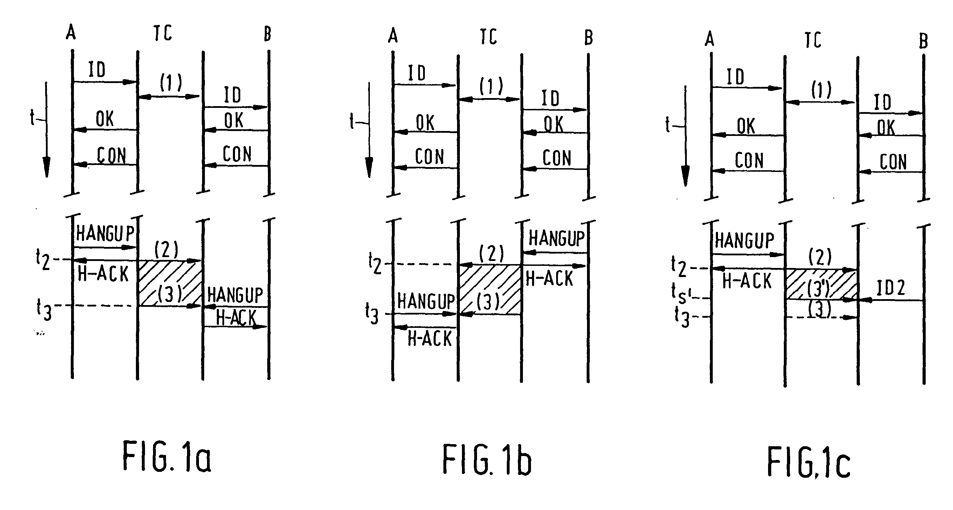

Although the telephone line and the telephone connection to be established over said telephone line may be routed via several telephone switching centres, in particular in the case of trunk calls and international calls, only one telephone switching centre TC is shown in Figures 1a and 1b for the sake of simplicity, which telephone switching centre functions as a local telephone switching centre both for the calling party A and for the called party B. For a better understanding of the method according to the invention, however, TC is indicated as the local telephone switching centre for the calling party A and as the remote telephone switching centre for the called party B. Generally, several switching centres will be present between said telepone switching centres, which all form part of the (international) telephone network and which route the setting up of the telephone connection between A and B.

Figures 1a and 1b schematically show the steps and the associated signals, set off against vertical time scale t, of the method according to the invention. The programme, or the method for establishing a telephone connection, that is present in the telephone switching centre TC comprises a procedure comprising a sequence of steps, which procedure commences the moment calling party A picks up his receiver and thus creates a physical connection X to TC over the telephone network. In most cases, calling party A is first confronted with a so-called dial tone over said physical connection X, so that the calling party A can input a telephone number. If the calling party A has been disconnected by his telephone company, he will not hear a dial tone upon picking up his receiver, of course. The same obtains in case of an overload of the telephone switching centre TC, because insufficient physical connections X are available in that case.

The telephone number of the party B to be called, which is to be dialled by the calling party A, can be regarded as an identity signal ID, which is received by switching centre TC and which is utilized for determining and creating a telephone line as well as for establishing a telephone connection with the called party B over said telephone line. In the case of local calls and international calls, said ID signal is routed to the remote telephone switching centre of the called party B, possibly via intermediate telephone switching centres, so as to be able to verify the identity of the called party B. Simultaneously with the transmission of the ID signal, a duplex speech connection is created over a telephone line.

The receipt of said ID signal at the remote end B results in two possible return signals; firstly, the called party B may not exist, because the number is not correct or has been disconnected, or the called party's line is busy, so that called party B cannot answer the call, and secondly the called party B is at liberty to answer the call. In the first situation, the verification of the ID signal will result in a refusal signal, which is sounded to the calling party A in the form of a busy signal.

In the other case, an OK signal will be generated at the remote end, which signal is transmitted not only to the calling party A, but which is moreover the signal for the telephone switching centre to make the telephone connection. This takes place by means of pulsed signals, which activate the ringer in the called party's telephone. The calling party A hears said ringing over his connection X. The moment called party B picks up the receiver, a so-called connection signal CON is sent over connection Y, which signal is transmitted to the calling party A, via telephone switching centre TC, over his connection X. At that moment the telephone connection has been made and a conversation between calling party A and called party B can take place over the duplex speech connection (1).

When the call is to be terminated, it suffices if either one of the parties breaks the connection, for example by putting the receiver down. The breaking of the connection by calling party A, in Figure 1, results in a HANGUP signal, which is acknowledged to A by telephone switching centre TC by means of a acknowledgement signal (H-ACK = Hangup-Acknowledge). Party B is still connected to the telephone network, however, and will thus hear the signals of the broken telephone connection. In order to utilize the still open telephone line in an effective manner, for example for advertising purposes, messages can be transferred to the party who is connected to this line.

Said messages are generated and transmitted in an efficient and quick manner, independently of local or remote telephone switching centres and without the intermediary of different telephone companies. A POI switching centre, which is operative at some point between the local telephone switching centre and the remote telephone switching centre in the telephone connection that has just been set up, generates the messages and transmits said messages via the telephone switching centre to the party who is still connected to the open telephone connection.

The message (2) at time t₂ may comprise any kind of information, for example information about the party who has broken the connection, or commercial information from a third party, for example information about the telephone rates of the telephone company or the carrier select company providing the telephone connection between parties A and B that has just been broken.

The advantages of this method are legion: the telephone line can be utilized more economically and efficiently by the telephone company in question, also after a telephone connection has been broken. If listener B does not wish to hear the messages, he can simply disconnect the still open telephone line with the telephone switching centre TC. This will result in a HANGUP signal which is received by TC, to which signal the telephone switching centre TC responds by sending an acknowledgement signal H-ACK.

In addition to this, the message may be terminated automatically at time t₃. See Figure 1a. After completion of the playing of the message at time t₃, the POI switching centre can break the connection with the called party B itself or repeat the message (until the called party B breaks the connection).

The situation wherein the called party B terminates the call with the calling party A by means of a HANGUP signal, after which a message will be played to calling party A, is shown in Figure 1b.

On the other hand, according to the invention the listener is capable of establishing a telephone connection, via his telephone set, with the sender of a message that is being played to him, which can be done during said message or after completion of said message. By pressing a particular button on his telephone set, for example during or shortly after said message, he will generate an ID2 signal at time t₃, which signals to the POI switching centre to set up a telephone connection with the sender of the message in accordance with the aforesaid steps. This option is schematically shown in Figure 1c.

In addition to this, the contents of the informational messages can easily and quickly be changed outside the telephone companies without any local interference in the local telephone switching centre or in the remote telephone switching centre or in the home switching unit PABX of either one of the parties being required. There is no need to modify said switching centres via costly and time-consuming hardware and software modifications, which leads to a much more efficient utilization of the telephone network.

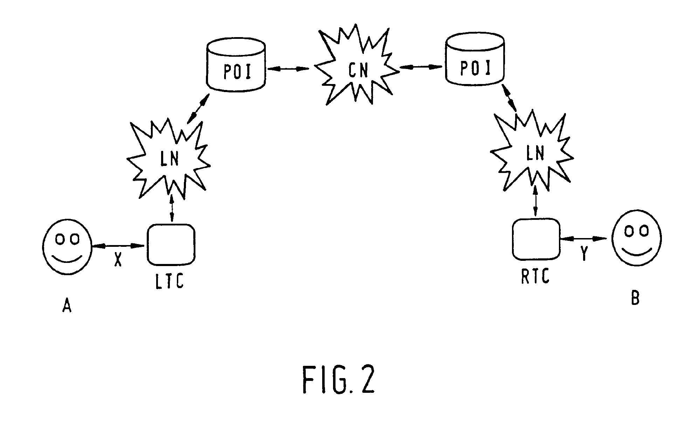

Figure 2 is another schematic representation of the method according to the invention, wherein like parts are indicated by the same reference indications. Calling party A will try to contact called party B via his local telephone switching centre LTC, the (international) telephone network and the remote telephone switching centre RTC. The local telephone networks LN, of which both telephone switching centres LTC and RTC form part, are interconnected by means of one or more "point-of-interconnect" centres POI and possibly a so-called "carrier network" CN. The setting up of the telephone connection between A and B, on the basis of the procedure that is shown in Figures 1a-1c, takes place via said interconnected telephone networks, whereby the setting up of the telephone connection is also analysed by a POI switching centre POI, which is operative at some point between the telephone switching centres LTC and RTC in the established telephone connection.

The moment a local or remote telephone switching centre LTC receives a HANGUP signal triggered by either one of the parties A or B hanging up, one of the POI switching centres POI will interfere in accordance with the invention and generate and transmit a message over the still open telephone connection to the party (A or B) that is still connected. The moment said party hangs up as well, said HANGUP signal is also received by the POI switching centre in question, causing it to terminate the informational message and to break the telephone connection between A and B definitively.

On the other hand, the POI switching centre is capable of establishing a telephone speech connection between said party and the sender of the informational message the moment the still connected party delivers an ID2 signal, which signal is received by the POI switching centre in question.

The invention furthermore relates to a telephone switching centre which is arranged for establishing telephone connections in accordance with the method of the invention.

## Claims

1. A method for establishing a telephone connection between a calling party (local) and a called party (remote) over a telephone line, comprising the steps of:
the transmission by the calling party of a signal regarding the identity of the called party to a local telephone switching centre;
the forwarding of said identity signal to the remote telephone switching centre of the called party by the local telephone switching centre, whether or not via several intermediate telephone switching centres, and the simultaneous setup of a duplex speech connection over the telephone line;
the receipt of a confirmation signal transmitted by the remote telephone switching centre and the forwarding of said confirmation signal to the calling party by the local telephone switching centre, in which signal the identity of the called party is confirmed;
the activation of the ringer in the called party's telephone;
the receipt by the local telephone switching centre of a connection signal from the called party the moment the called party answers the telephone, as a result of which a telephone speech connection is established over the telephone line that has been set up,
**characterized in that** after the telephone connection has been terminated by the calling party or the called party, a message, for example a commercial message, is generated in the "point-of-interconnect" switching centre that is operative at some point between the local telephone switching centre and the remote telephone switching centre in the established telephone connection, which message is transmitted to the party who is still connected to the open telephone connection.

2. A method according to claim 1, **characterized in that** the party listening to the message is capable of establishing a telephone connection with the sender of the message, via said party's telephone set, while the message is being reproduced.

3. A method according to claim 1 or 2, **characterized in that** the contents of the message are partially determined by the identity signal or by the telephone switching centre in question.

4. A telephone switching centre which is arranged for establishing telephone connections in accordance with the method as defined in any one or more of the preceding claims.
